# EUROPÄISCHE PATENTSCHRIFT

(11) **EP 0 788 583 B1**
(45) Veröffentlichungstag und Bekanntmachung des Hinweises auf die Patenterteilung: **07.01.1999**
(21) Anmeldenummer: 95933294.1
(22) Anmeldetag: 18.10.1995
(51) Int. Cl.: F03B 1/00, F01D 1/02, F01D 17/18

(54) **DÜSENANORDNUNG FÜR EINE FREISTRAHLWASSERTURBINE**
NOZZLE ARRANGEMENT FOR AN OPEN-JET WATER TURBINE
SYSTEME D'AJUTAGES POUR TURBINE HYDRAULIQUE A JET LIBRE

(30) Priorität: 25.10.1994 DE 4438012
(43) Veröffentlichungstag der Anmeldung: 13.08.1997
(73) Patentinhaber: Sulzer Hydro AG, 8023 Zürich (CH)
(72) Erfinder: GEPPERT, Lothar, D-88045 Friedrichshafen (DE)
(74) Vertreter: Hammer, Bruno Dr.
(86) Internationale Anmeldenummer: CH9500242
(87) Internationale Veröffentlichungsnummer: WO9612888

(56) Entgegenhaltungen:
- DE-A- 2 429 538
- DE-A- 3 404 921
- DE-C- 125 184
- DE-C- 373 611
- GB-A- 284 806
- JP-A- 5 256 243
- JP-A- 5 256 244
- US-A- 2 735 647
- FUJI ELECTRICAL REVIEW, Bd. 36, Nr. 2, 1990 JAPAN, Seiten 70-76, KUBOTA K.KAWAKAMI 'OBSERVATION OF JET INTERFERENCE IN 6-NOZZLE PELTON TURBINE'

## Beschreibung

Die Erfindung handelt von einer wassergetriebenen Peltonturbine für Leistungen grösser als 1 Kilowatt mit einem Becherrad, das mindestens eine um drei grössere Anzahl Becher aufweist als Einspritzdüsen am Umfang angeordnet sind, wobei benachbarte Einspritzdüsen jeweils um einen Versetzungswinkel α mit ihren Düsenmittellinien zueinander versetzt sind.

Peltonwasserturbinen sind in der Regel mit einem elektrischen Generator zur Stromerzeugung gekoppelt, wobei Turbinenwelle und Generatorwelle miteinander verbunden sind. D.h. bei einer Peltonturbine kann das Turbinenrad auf der Generatorwelle sitzen und frei in der Luft hängend in einem Gehäuse umlaufen. Es wird je nach Durchflussmenge von 1 bis 6 Einspritzdüsen mit dem Wasser aus einer Druckrohrleitung auf einem mittleren Strahlkreisdurchmesser Dₛ tangential beaufschlagt. Die regelbaren Nadeldüsen sind gleichmässig über den Umfang versetzt angeordnet, d.h. der Versetzungswinkel der Düsen einer z.B. 4-düsigen Anordnung beträgt praktisch immer 90°. Die Mittellinie der Düsen liegt in der Ebene der axialen Turbinenradmitte, damit der Wasserstrahl gleichmässig in beide Becher eines Paares einläuft und zu beiden Seiten gleichmässig um fast 180° umgelenkt wird (J. Raabe; "Hydraulische Maschinen und Anlagen"; VDI Verlag; 2. Auflage; Düsseldorf 1989; S. 453 ff.). Um den Generator klein auszuführen, muss die Drehzahl der Turbine möglichst hoch sein. Bei gegebener Wasserstrahlgeschwindigkeit kann man dies nur durch einen kleinen Turbinendurchmesser erreichen. Um den Durchmesser der Peltonturbine relativ klein zu halten, führt man die Turbine ab einer bestimmten Durchflussmenge, bzw. ab einer spezifischen Drehzahl von n_{q} = 10 mit einer 2-düsigen Einspritzanlage aus (n_{q} = n Q^{½} / H^{¾}; siehe J. Raabe; "Hydraulische Maschinen und Anlagen"; VDI Verlag; 2. Auflage; Düsseldorf 1989; S. 184 und S. 278). Die Welle zum Generator ist hierbei normalerweise liegend. Um noch grössere Wassermengen zu verarbeiten, wird zusätzlich ein zweites Laufrad mit einer z.B. 2-düsigen Einspritzanlage auf die gleiche Welle montiert (siehe z.B. Achenseekraftwerk der TIWAG; Tirol). Nur bei sehr grossen Anlagen und mindestens 4 Einspritzdüsen geht man zur technisch aufwendigen aber strömungsgünstigen stehenden Generatorwelle über (siehe z.B. Kraftwerk Silz der TIWAG; Tirol).

Die Patentschrift U.S. 2,735,647 offenbart Anordnungen für vertikale Impulsturbinen mit mindestens zwei Einspritzdüsen, welche soweit am Umfang zusammengerückt sind, dass die resultierende Wellenlagerkraft in ihrer Richtung auf einen begrenzten Winkelbereich beschränkt ist, und dass der Rotor einfacher radial ausbaubar ist. Als besonders wünschenswert wird dabei angesehen, dass der Versetzungswinkel zwischen zwei beliebigen Einspritzdüsen nicht einem Vielfachen von sich folgenden Bechern entspricht. Zur Einhaltung dieser Bedingung wird eine mathematische Darstellung gezeigt, die als zusätzliche Auflage die Randbedingung erfüllt, dass der von den Düsen als Gruppe beanspruchte Winkel kleiner ist als 360° - 360°/Düsenzahl. Es werden am Beispiel von 4 Düsen und von 24 Bechern mehrere hundert Kombinationen von Düsenpositionen aufgezeigt, die diese Bedingungen erfüllen. Die konstruktiv offenbarten Beispiele zeigen Zwischenwinkel, die grösser als 60° sind.

In einer weiteren Patentschrift DE 125 184 aus dem Jahr 1900 wird bei einer Freistrahlturbine mit 17 am Umfang gleichmässig verteilten Einspritzdüsen ein spezielles Laufrad mit 17 in axialer Richtung mehrfach unterteilten Bechern untersucht und im Vergleich zu einem unter gleichen Verhältnissen eingebauten Peltonrad ein um 5 bis 12 % höherer Nutzeffekt festgestellt.

Eine weitere Patentschrift DE 373 611 beschreibt die Herstellung eines Schaufelrades für Druckluftturbinen. Die Schaufeln werden an einem kreisförmigen Blech, dem späteren Laufrad, freigeschnitten und anschliessend um etwa 90° aus der Ebene des Blechs herausgebogen. Ein solches Laufrad ist im eingebauten Zustand in einem Gehäuse mit einem Leitapparat für Teilbeaufschlagung gezeigt.

Die Offenlegungsschrift DE-A-34 04 921 handelt von einem Leitschaufelsystem mit parallelen Leitschaufeln, wie sie bei kompressiblen Medien in Turbinen und Kompressoren verwendet werden, wobei in den Kanälen zwischen den Leitschaufeln individuelle, verstellbare Ventile angeordnet sind, um die Strömungsverluste im Bereich der Leitschaufeln klein zu halten.

In der Offenlegungsschrift DE-OS 24 29 538 setzt der Verfasser den Energieerhaltungssatz ausser Kraft und glaubt in langsam fliessenden Gewässern mit dem natürlichen Gefälle - ohne Anlegen von Staudämmen und/oder Staubecken - höchste Leistungen zu erzielen, indem er die Wasserzufuhr bis zu einer Düse konisch verjüngt und mehrere solcher Düsen gruppen- und batterieweise auf ein oberschlächtiges Kammerrad lenkt. Er glaubt dabei trotz vorgegebenem Potential und trotz einer Widerstandsvergrösserung in Form von einer Querschnittsverringerung die mögliche Wasserkraft besser zu nutzen.

Die Erfindung hat die Aufgabe den Einsatzbereich des Laufrades einer wassergetriebenen Peltonturbine zu verbessern. Diese Aufgabe wird dadurch gelöst, dass zur Verbesserung des Schaufelwirkungsgrades mehr als zwei Düsen zu einer Düsengruppe am Umfang zusammengefasst sind, und dass die Versetzungswinkel α innerhalb der Gruppe gleich sind und weniger als 44° betragen und dass ein Becher, der zwei benachbarte Düsenstrahlen einer Düsengruppe durchfährt, zwischen den beiden Düsen nicht weniger als 50 % einer Düsenbeaufschlagung erfährt.

Nach der bisherigen Lehre ist man der Annahme, dass sich das Wasser zweier Einspritzdüsen nicht stören darf. Dies gilt erwiesenermassen für die herkömmliche 6-düsige Turbine, bei der der Versetzungswinkel der Strahlen konstant 60° beträgt. Der Wirkungsgrad ist dabei nicht optimal, da das Restwasser des vorangehenden Strahles das Wasser des nachfolgenden Strahles unter dem Winkel von 60° trifft und relativ stark ablenkt. Es war daher die bisherige Lehre, die durch Versuche untermauert war, dass ausgehend von Versetzungswinkeln α um 900 mit einem Verkleinern des Versetzungswinkels auch die Wirkungsgrade schlechter werden.

Die Erfindung zeigt nun, dass bei einer weiteren Verkleinerung der Versetzungswinkel α keine stetige Verschlechterung des Wirkungsgrades eintritt, sondern im Gegenteil, dass der Wirkungsgrad nach Unterschreiten eines bestimmten Versetzungwinkels α wieder auf hohe Werte ansteigt. Die Erklärung dazu liegt darin, dass sich die Strahlen bei kleiner werdenden Versetzungswinkel α schlussendlich zu einer Art Spiralströmung mit Radialkomponente vereinigen, etwa wie im Spiralgehäuse einer Francisturbine. Die Verluste der gegenseitigen Strahlablenkung werden kleiner. Gleichzeitig kann pro Becher eine höhere und mit weniger Verlusten behaftete Beaufschlagung erreicht werden.

Vorteilhafte Weiterbildungen der Erfindung sind in den Ansprüchen 2 bis 11 gezeigt. So ist es vorteilhaft, mehrere Einspritzdüsen in einer Düsengruppe mit kleinem Versetzungswinkel α zusammenzufassen, wobei ein Anstieg des Wirkungsgrades bereits mit Versetzungswinkeln von 38° und kleiner einsetzt, während ein Optimum zwischen 29° bis 20° beispielsweise bei 27° liegen kann. Die Düsengruppe an sich erhöht die Lebensdauer der Turbine, da die Turbinenbecher nicht mehr pro Düse einen Lastwechsel erfahren, sondern nur noch pro Düsengruppe. Ermüdungsbrüche treten damit seltener auf.

Ein weiterer Vorteil ist die geringere Lärmentwicklung. Das besonders lärmintensive Anschneiden des Wasserstrahles durch die vordere Eintrittschneide eines leeren Bechers erfolgt nur noch einmal pro Düsengruppe und nicht mehr bei jeder Düse. Mehrere solcher Düsengruppen können so am Umfang verteilt werden, dass sich die Radialkräfte in der Turbinenlagerung weitgehend aufheben.

Die erfindungsgemässe Anordnung erlaubt eine hohe Wasserbeaufschlagung der Turbine, da durch den kleinen Versetzungswinkel bis zu 12 Einspritzdüsen über den Umfang der Turbine verteilt werden können, wobei die Welle dann senkrecht angeordnet sein müsste. Besonders bei stark schwankenden Wassermengen würde das Peltonrad mit der Einspritzanlage nach dieser Erfindung den Francisturbinen-Langsamläufer bis zu einer spezifischen Drehzahl von n_{q} ≈ 35 Verdrängen.

Durch gezieltes Zu- und Wegschalten der jeweiligen äusseren Einspritzdüsen einer Düsengruppe verläuft der Wirkungsgrad fast über den gesamten Bereich der Wasserschwankung vom eindüsigen Betrieb, d.h. von ¼ der Vollastwassermenge bei vier Düsen bis zur Vollast als sehr flache Kurve mit hohem Maximalwert.

Ein weiterer Vorteil ist die bauliche Vereinfachung der Wasserzuführung und der Strahlabdrücker. Die Zulaufrohre sind kürzer, und die Krümmungen sind schwächer, wodurch sich der Düsenwirkungsgrad verbessert. Der Platzbedarf der Einspritzanlage wird wesentlich reduziert und der Mechanismus zur Düsenregulierung liegt nahe beisammen.

Die hohe Wasserbeaufschlagung erlaubt es, mit einem Turbinenrad wesentlich höhere Leistungen zu verarbeiten. Die bauseitigen Investitionen werden daher in der Turbinengrösse, im Platzbedarf und in der Wasserzuführung auf die Leistung bezogen geringer.

Anstatt einer für den Bereich n_{q} = 14 bis 20 gewöhnlich 2-rädrigen Anlage mit je 2 Einspritzdüsen kann ohne aufwendige Ringleitung und stehende Welle eine einrädrige Anlage mit 4 Einspritzdüsen gebaut werden. Die Turbine kann unter Beibehaltung einer preisgünstigen liegenden Wellenanordnung von bis zu 6 Einspritzdüsen beaufschlagt werden. Es entstehen keine zusätzlichen Ventilationsverluste oder Lagerreibungsverluste durch ein zweites Laufrad. Die bauliche Vereinfachung wurde oben erwähnt.

Bei einer herkömmlichen zweidüsigen Anlagen mit waagrechter Welle liegen die Rohrbögen der Wasserzuleitung meist nicht in einer Ebene, wodurch das Wasser in Rotation versetzt wird. Dieses weitbekannte Problem führt zur Zerstäubung des Freistrahls durch Zentripetalkräfte und damit zu einer Wirkungsgradverminderung. Bei der erfindungsgemässen Düsengruppe entfällt die starke Krümmung von der ersten zu den weiteren Düsen. Ausserdem ist die Zerstäubung des Strahles geringer, da sich die Rohrkrümmungen wegen des geringeren Bauraums meist in einer Ebene ausführen lassen.

Im folgenden wird die Erfindung anhand von Ausführungsbeispielen beschrieben. Es zeigen:
- Fig. 1: Schematisch ein Turbinenlaufrad, welches von einer 4-düsigen Düsengruppe beaufschlagt ist, deren Versetzungswinkel α = 27° beträgt.
- Fig. 2: schematisch die anfallende Wassermenge Q_{B} für einen Becher bei einer Umdrehung U von 360° und der herkömmlichen Beaufschlagung bei einer 4-düsigen Anlage mit einem Versetzungswinkel α = 90°, und
- Fig. 3: schematisch die anfallende Wassermenge Q_{B} für einen Becher bei einer Umdrehung U von 360° und Beaufschlagung von einer 4-düsigen Düsengruppe, deren Versetzungswinkel α = 27° beträgt.

Der Gegenstand der Erfindung soll am Beispiel einer 4-düsigen Turbine erläutert werden:

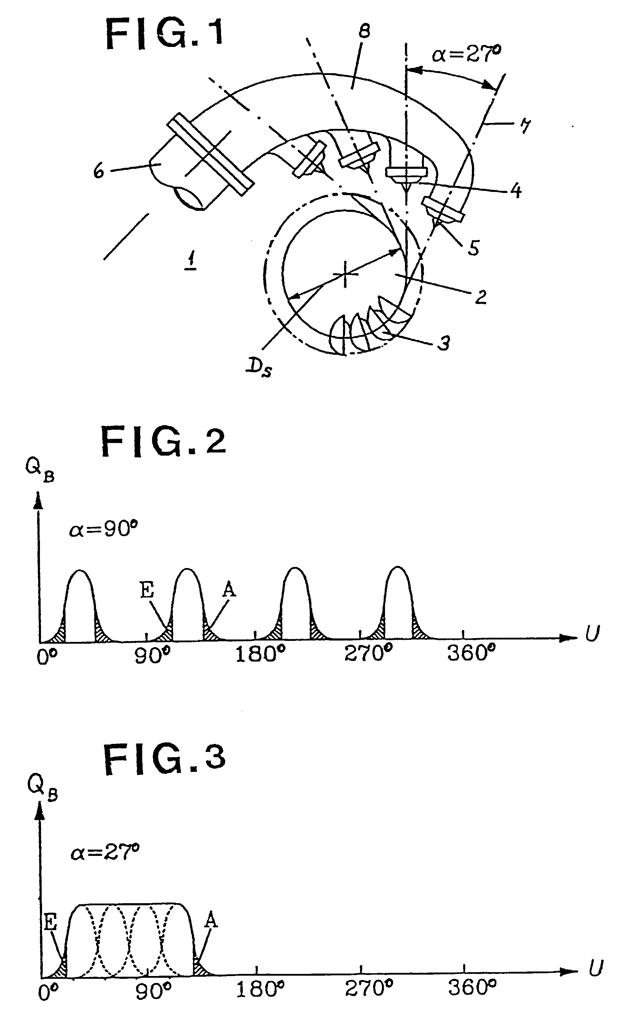

Gewöhnlich beträgt der Versetzungswinkel der 4 Einspritzdüsen konstant a = 90°. Ein jeder Becher der Turbine füllt und entleert sich 4 mal pro Radumdrehung (= 360°, Fig. 2). Bei der erfindungsgemässen Anordnung folgen die Einspritzdüsen in einer "Düsengruppe" so eng aufeinander, dass der Becher sich beim Eingriff des ersten Wasserstrahles zuerst füllt, dann aber schon von der nachfolgenden Einspritzdüse beaufschlagt wird, wenn der Becher das Wasser der ersten Einspritzdüse entleert (Fig. 3). Der Versetzungswinkel α der Düsenmittellinien wird so gewählt, dass die Hüllkurve der vereinigten Wasserbeaufschlagung eine möglichst konstante Oberkurve darstellt. Dies wird bei α ≈ 30° erreicht.

Wenn alle 4 Düsen direkt hintereinander folgen, steigt die Wassermenge im Turbinenbecher also pro Radumdrehung nur einmal an und fällt nach dem vierten Düsenstrahl auch nur einmal ab.

Treten durch die Anordnung der Düsen in einer einzigen Düsengruppe zu hohe Biegemomente in der Welle auf, so kann man auch mehrere Düsengruppen gleichmässig über den Umfang verteilen. Es erfolgt dann eine Zunahme und eine Abnahme der Wassermenge pro Düsengruppe.

Im Bereich um die maximale (volle) Becherbeaufschlagung arbeitet die Turbine mit dem bestem Wirkungsgrad, da der hydraulische Radius des Strahls rₕ dann am grössten ist (rₕ = Wasserquerschnittsfläche / Reibflächenumfang; siehe "Hütte, des Ingenieurs Taschenbuch"; Verlag von Wilhelm Ernst & Sohn; 27. Auflage; Berlin 1941; S. 472 oder J. Raabe; "Hydraulische Maschinen und Anlagen"; VDI Verlage; 2. Auflage; Düsseldorf 1989; S. 808). Die hydraulische Verlustleistung durch Reibung und Wirbelbildung im Becher ist dann im Verhältnis zur Impulskraft des Wassers am kleinsten. Die geringen Wassermengen beim Eintritt (E) und Austritt (A) des Strahles aus dem Becher (schraffierte Flächen (E) und (A) in Fig. 2) werden mit schlechterem Wirkungsgrad verarbeitet, da der Strahl hierbei flach über den Becher ausgeweitet ist. Seine Impulskraft ist im Verhältnis zur Reibfläche gering.

Dieser Anfangs- und Endbereich, bei dem der Wirkungsgrad schlecht ist, kommt bei der gewöhnlichen Düsenanordnung pro Düse einmal vor (im Beispiel der Fig. 2 genau acht mal), bei der erfundenen Düsenanordnung jedoch nur einmal pro Düsengruppe (2 schraffierte Flächen (E) und (A) in Fig. 3).

Die erfindungsgemässe Vereinigung der Strahlen ergibt im Wassermengendiagramm (Fig. 3) eine konstante Oberkurve, was bedeutet, dass die Schaufel die grösste Wassermenge konstant über den ganzen Bereich der Düsengruppe mit bestem Wirkungsgrad verarbeitet. Dies bewirkt eine Verbesserung des hydraulischen Wirkungsgrades der Turbine.

Als Einspritzdüse wird eine herkömmliche Nadeldüse verwendet. Die Düsenmittellinien tangieren den gewöhnlichen Strahlkreisdurchmesser der Turbine Dₛ, (d.h. an der Turbine sind keine Veränderungen durchzuführen). Das Zuleitungsrohr 6 zu jeder Düsengruppe besteht nun aus einem einzigen gekrümmten Rohrende 8, das sich in Fliessrichtung verjüngt. Die einzelnen Düsenhälse werden wie üblich an dieses Rohrstück angeschweisst. Bei einer Turbine mit einer spezifischen Drehzahl pro Düse von n_{qo} = 3 (Langsamläufer) liegt der nach dieser Erfindung optimale Düsenversetzungswinkel bei α = 19° (n_{qo} = n·Q_{d}^{½} / H^{¾}, wobei Qd der Durchfluss pro Düse ist; siehe J. Raabe; "Hydraulische Maschinen und Anlagen"; VDI Verlag; 2. Auflage; Düsseldorf 1989; S. 292). Für n_{qo} = 7 wäre α = 27°, und für n_{qo} = 11 wäre α = 35° der optimale Versetzungswinkel. Andere Winkel lassen sich hieraus für die jeweilige spezifische Drehzahl interpolieren.

Fig. 1 zeigt ein Beispiel für die Anordnung der Einspritzdüsen. Die Turbine hat eine spezifische Drehzahl von n_{q} = 14. Eine Turbine hat erfahrungsgemäss den besten Wirkungsgrad, wenn n_{qo} ≈ 7 ist. Aus der Formal n_{q} = (i_{D} · i_{R}) ^{½} . n_{qo} (mit i_{D} = Düsenzahl und i_{R} = Räderzahl) ergibt sich eine günstige Anordnung, wenn man i_{D} = 4 und i_{R} = 1 wählt. Diese 4-düsige, einrädrige Anordnung wird erfindungsgemäss mit einem Düsenversetzungswinkel von α = 27° konstruiert.

## Patentansprüche

1. Wassergetriebene Peltonturbine (1) für Leistungen grösser als 1 Kilowatt mit einem Becherrad (2), das mindestens eine um drei grössere Anzahl Becher aufweist, als Einspritzdüsen (4) am Umfang angeordnet sind, wobei benachbarte Einspritzdüsen jeweils um einen Versetzungswinkel α mit ihren Düsenmittellinien (7) zueinander versetzt sind, wobei zur Verbesserung des Schaufelwirkungsgrades mehr als zwei Düsen (4) zu einer Düsengruppe am Umfang zusammengefasst sind, die Versetzungwinkel α innerhalb der Gruppe gleich sind und weniger als 44° betragen und ein Becher, der zwei benachbarte Düsenstrahlen einer Düsengruppe durchfährt, zwischen den beiden Düsen nicht weniger als 50 % einer Düsenbeaufschlagung erfährt.

2. Peltonturbine nach Anspruch 1, dadurch gekennzeichnet, dass die Versetzungswinkel α innerhalb der Gruppe 38° oder weniger betragen.

3. Peltonturbine nach Anspruch 2, dadurch gekennzeichnet, dass die Versetzungswinkel α innerhalb der Gruppe einem Wert von 29° bis 20°, vorzugsweise 27° entsprechen.

4. Peltonturbine nach einem der Ansprüche 1 bis 3, dadurch gekennzeichnet, dass die Einspritzdüsen (4) einer Düsengruppe über ein gemeinsames gekrümmtes Rohr (8) angespeist sind.

5. Peltonturbine nach Anspruch 4, dadurch gekennzeichnet, dass mehrere Düsengruppen am Umfang verteilt sind.

6. Peltonturbine nach Anspruch 1 bis 5, dadurch gekennzeichnet, dass Einspritzdüsen (4) einzeln ab- und zuschaltbar sind, um die Leistung zu verändern.

7. Peltonturbine nach Anspruch 1 bis 6, dadurch gekennzeichnet, dass die Strahlen von Einspritzdüsen (4) regelbar sind, um die Leistung zu verändern.

8. Peltonturbine nach Anspruch 1 bis 7, dadurch gekennzeichnet, dass die spezifische Drehzahl pro Einspritzdüse n_{qo} resp. D₁/B₂ zwischen den Werten 5 bis 11 liegt, und dass der Versetzungswinkel α innerhalb einer Gruppe einem Wert zwischen 20° und 40° entspricht.

9. Peltonturbine nach Anspruch 1, dadurch gekennzeichnet, dass neun bis fünfzehn Einspritzdüsen gleichmässig am Umfang mit einem gleichen Versetzungswinkel α zueinander angeordnet sind.

10. Peltonturbine (1) nach einem der Ansprüche 4 bis 9, dadurch gekennzeichnet, dass bei einer Düsengruppe jeweils nur äussere Einspritzdüsen (4) zuschaltbar oder wegschaltbar sind, um bei verändertem Leistungsbedarf in den Bereichen zwischen den momentanen aktiven Einspritzdüsen einer Gruppe eine Hüllkurve mit einer hohen Becherbeaufschlagung beizubehalten.

## Claims

1. Water driven Pelton turbine (1) for powers greater than 1 kilowatt which a cupped rotor (2) which has a number of cups that is at least greater by three than the number of injection nozzles (4) arranged at the periphery, with the nozzle centrelines (7) of adjacent injection nozzles being displaced with respect to one another by a respective displacement angle α, wherein more than two nozzles (4) are collected together to a nozzle group at the periphery in order to improve the blade efficiency, the displacement angles α within a group are equal and amount to less than 44°, and a cup which passes through two adjacent nozzle jets of a nozzle group experiences not less than 50 % of a nozzle loading between the two nozzles.

2. Pelton turbine in accordance with claim 1,
characterised in that the displacement angles α within the group amount to 38° or less.

3. Pelton turbine in accordance with claim 2,
characterised in that the displacement angles α within the group correspond to a value from 29° to 20°, preferably 27°.

4. Pelton turbine in accordance with one of the claims 1 to 3,
characterised in that the injection nozzles (4) of a nozzle group are fed via a common curved pipe (8).

5. Pelton turbine in accordance with claim 4,
characterised in that a plurality of nozzle groups are distributed around the periphery.

6. Pelton turbine in accordance with claim 1 to 5,
characterised in that injection nozzles (4) can be switched on and off individually in order to vary the power.

7. Pelton turbine in accordance with claim 1 to 6,
characterised in that the jets of the injection nozzles (4) can be regulated in order to vary the power.

8. Pelton turbine in accordance with claim 1 to 7,
characterised in that the specific speed of rotation per injection nozzle n_{qo} or D₁/B₂ lies between the values 5 to 11; and in that the displacement angle α within a group corresponds to a value between 20° and 40°.

9. Pelton turbine in accordance with claim 1,
characterised in that nine to fifteen injection nozzles are arranged uniformly about the periphery with a common displacement angle α with respect to one another.

10. Pelton turbine (1) in accordance with one of the claims 4 to 9,
characterised in that in a nozzle group in each case only outer injection nozzles (4) can be switched on or off in order to retain an envelope curve with a high cup loading in the regions between the momentarily active injection nozzles of a group with a changed power requirement.

## Revendications

1. Turbine de Pelton (1) entraînée par l'eau pour des puissances supérieures à 1 kilowatt avec une roue à augets (2) qui présente au moins un nombre supérieur de trois d'augets que de buses d'injection (4) disposées au pourtour, où des buses d'injection avoisinantes sont décalées respectivement les unes aux autres d'un angle de décalage a avec leurs lignes centrales de buse (7), où pour améliorer le degré de rendement des augets, plus que deux buses (4) sont réunies en un groupe de buses au pourtour, les angles de décalage α à l'intérieur du groupe sont identiques et sont inférieurs à 44°, et un auget qui passe à travers deux jets de buse avoisinants d'un groupe de buses subit entre les deux buses une sollicitation de buse qui n'est pas inférieure à 50 % d'une sollicitation de buse.

2. Turbine de Pelton selon la revendication 1, caractérisée en ce que les angles de décalage α à l'intérieur du groupe sont de 38° ou inférieurs.

3. Turbine de Pelton selon la revendication 2, caractérisée en ce que les angles de décalage α à l'intérieur du groupe correspondent à une valeur de 29° à 20°, de préférence à 27°.

4. Turbine de Pelton selon l'une des revendications 1 à 3, caractérisée en ce que les buses d'injection (4) d'un groupe de buses sont alimentées par un tube courbé commun (8).

5. Turbine de Pelton selon la revendication 4, caractérisée en ce que plusieurs groupes de buses sont répartis au pourtour.

6. Turbine de Pelton selon les revendications 1 à 5, caractérisée en ce que des buses d'injection (4) peuvent être individuellement mises hors et en service pour modifier la puissance.

7. Turbine de Pelton selon les revendications 1 à 6, caractérisée en ce que les jets des buses d'injection (4) sont réglables pour modifier la puissance.

8. Turbine de Pelton selon les revendications 1 à 7, caractérisée en ce que le nombre de tours spécifique par buse d'injection n_{qo} respectivement D₁/B₂ se situe entre les valeurs 5 à 11 et que l'angle de décalage α correspond à l'intérieur d'un groupe à une valeur comprise entre 20° et 40°.

9. Turbine de Pelton selon la revendication 1, caractérisée en ce que neuf jusqu'à quinze buses d'injection sont disposées régulièrement au pourtour avec un même angle de décalage α les unes aux autres.

10. Turbine de Pelton (1) selon les revendications 4 à 9, caractérisée en ce que dans un groupe de buses respectivement seulement des buses d'injection extérieures (4) peuvent être mises en ou hors service en plus pour, lors d'une exigence de puissance modifiée, conserver dans les zones entre les buses d'injection momentanément actives d'un groupe une enveloppante d'une sollicitation élevée des augets.
